# EUROPÄISCHE PATENTSCHRIFT

(11) **EP 3 670 431 B1**
(45) Veröffentlichungstag und Bekanntmachung des Hinweises auf die Patenterteilung: **22.02.2023**
(21) Anmeldenummer: 19214356.8
(22) Anmeldetag: 09.12.2019
(51) Int. Cl.: B67C 3/20, G01G 15/00

(54) **VORRICHTUNG ZUM BEFÜLLEN VON BEHÄLTNISSEN UND VERFAHREN ZUM BETREIBEN DER VORRICHTUNG**
DEVICE FOR FILLING CONTAINERS AND METHOD FOR OPERATING SAID DEVICE
DISPOSITIF DE REMPLISSAGE DES RÉCIPIENTS ET PROCÉDÉ DE FONCTIONNEMENT DUDIT DISPOSITIF

(30) Priorität: 20.12.2018 DE 102018133121
(43) Veröffentlichungstag der Anmeldung: 24.06.2020
(73) Patentinhaber: KRONES AG, 93073 Neutraubling (DE)
(72) Erfinder: Bock, Tobias, 93073 Neutraubling (DE); Ziegler, Manfred, 93073 Neutraubling (DE)
(74) Vertreter: v. Bezold & Partner Patentanwälte - PartG mbB

(56) Entgegenhaltungen:
- EP-A1- 1 422 139
- WO-A2-2014/153520

## Beschreibung

### Technisches Gebiet

Die Erfindung betrifft eine Vorrichtung zum Befüllen von Behältnissen und ein Verfahren zum Betreiben einer Vorrichtung zum Befüllen von Behältnissen. Die Vorrichtung weist eine Füllvorrichtung mit mehreren Füllstationen zum Befüllen der Behältnisse auf. Die Vorrichtung weist eine Transportvorrichtung zum Übergeben der Behältnisse zwischen der Transportvorrichtung und den mehreren Füllstationen auf.

### Technischer Hintergrund

Ein bei automatischen Füllvorrichtungen auftretendes Problem kann die sogenannte Fehlbefüllung sein. Dabei füllt eine Füllstation der Füllvorrichtung ein fließfähiges Medium ins Leere, da kein Behältnis in der Füllstation vorhanden ist. Das fließfähige Medium kann sowohl die Füllvorrichtung selbst als auch nachgelagerte Anlagenteile stark verschmutzen, insbesondere in Fällen, in denen zähflüssige Medien wie bspw. Ketchup o. Ä. durch die Füllstation abgefüllt werden. Die zeitaufwändige Reinigung der Anlage erfordert einen Anlagenstopp, sodass es zu ungewünschten Produktionsausfällen kommt.

Um das Risiko von Fehlbefüllungen zu verringern, können bspw. optische Behältniserkennungseinrichtungen verwendet werden, die ein Signal erzeugen, das bspw. angibt, ob in einem Zuführstern, der Behältnisse zu der Füllvorrichtung zuführt, ein Behältnis vorhanden ist oder nicht. Nachteilig an derartigen Lösungen kann sein, dass unabhängig von der technischen Ausführung der Behältniserkennungseinrichtung nicht erkannt wird, wenn das Behältnis bei der Behältnisübergabe zwischen dem Zuführstern und der Füllstation beschädigt, verloren oder nicht richtig übergeben wird. Fehlfüllungen können somit weiterhin auftreten.

Es kann auch mit Hilfe einer Wägezelle der Füllstation nach der Übergabe durch Messen des Leergewichts auf ein Vorhandensein eines Behältnisses geprüft werden. Hierbei wird eine Einschwingzeit des Messsignals abgewartet, um Fehlmessungen zu vermeiden. Ein wesentlicher Nachteil besteht hier in der Anwendung von sogenannten digitalen Filtern, welche das Messsignal und auch störende Schwingungen dämpfen. Diese Filter benötigen eine sogenannte Beruhigungszone, in welcher die Wägezelle nach der Behältnisübergabe einschwingt. Derartige Systeme sind bspw. aus der JP 2004-189248 A und der JP 2003-118701 A bekannt.

Die WO 2014/153520 A2 offenbart einen Behälter-Handling-Arm mit einer Wägezelle. Basierend auf Signalen der Wägezelle, den bekannten Abmessungen des Arms und der Konfiguration der Halterungen kann eine Steuerung eines Füllsystems, das den Arm enthält, das Gewicht eines vom Arm gehaltenen Behälters bestimmen. In einem Schritt bestimmt die Steuerung, ob ein leerer Behälter in den Greifer des Arms eingesetzt wurde. Diese Bestimmung basiert darauf, ob ein aktuell empfangenes Signal von der Wägezelle mit dem Gewicht eines leeren Behälters übereinstimmt.

Der Erfindung liegt die Aufgabe zu Grunde, ein alternatives und/oder verbessertes Verfahren und eine entsprechende Vorrichtung zu schaffen, mit dem bzw. mit der vorzugsweise das Risiko einer Fehlbefüllung verringert werden kann.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Die Erfindung schafft ein Verfahren zum Betreiben einer Vorrichtung zum Befüllen von Behältnissen (z. B. Flaschen, Dosen und/oder anderer Behältnisse). Das Verfahren weist ein Erfassen eines Messsignals einer Wiegevorrichtung einer Füllstation von mehreren Füllstationen einer Füllvorrichtung, vorzugsweise eines Füllerkarussells, auf. Das Messsignal wird in einem vorbestimmten Behältnisübergabe-Signalfenster zur (z. B. direkten) Übergabe eines Behältnisses zwischen (z. B. von oder zu) einer Transportvorrichtung, vorzugsweise einer Zuführvorrichtung (z. B. Zuführstern), und (z. B. zu bzw. von) der Füllstation erfasst. Das Verfahren weist ein Erkennen, ob ein Behältnis in der Füllstation vorhanden ist, basierend auf dem Messsignal auf.

Das Verfahren beruht auf der Erkenntnis, dass das einschwingende Messsignal der Wiegevorrichtung während der Behältnisübergabe genügend charakteristisch ist, um eine korrekte Behältnisübergabe in die Füllstation zu erkennen. Das Messsignal kann zweckmäßig direkt an der Übergabestelle ausgelesen und derart ausgewertet werden, dass daraus ein entsprechendes Behältnis-Vorhanden-Signal gebildet werden kann. Damit kann eine nahezu 100%-ige Signalgenerierung erfolgen, und Fehlfüllungen können damit, auch bei hoher Leistung, nahezu ausgeschlossen werden. Das Verfahren kann gegenüber den herkömmlichen Behältniserkennungseinrichtungen den Vorteil bieten, dass auch fehlerhafte Übergaben zwischen der Zuführvorrichtung und der Füllstation sicher erkannt werden können. Kommt es bspw. zu einer Beschädigung oder einem Verlust eines Behältnisses bei der Übergabe, so kann dies durch Auswertung des im Behältnisübergabe-Signalfenster erfassten Messsignals erkannt und eine nachfolgende Fehlfüllung verhindert werden. Das Verfahren kann ferner gegenüber bisherigen Erkennungsverfahren mittels Wägezellen den Vorteil aufweisen, dass keine Einschwingzeit des Messsignals abgewartet wird und zweckmäßig auf die Verwendung von digitalen oder analogen Filtern verzichtet werden kann. Das Verfahren ermöglicht somit eine frühe Signalauswertung zur Erkennung eines Vorhandenseins eines Behältnisses in der Füllstation. Sofern ein Behältnis vorhanden ist, kann somit auch früher mit einer Befüllung begonnen werden. Eine Beschleunigung der Verfahren auf der Füllvorrichtung ermöglicht es zudem, dass die Füllvorrichtung verkleinert werden kann. Bspw. kann eine Anzahl der Füllstationen reduziert werden.

Alternativ oder zusätzlich kann das Verfahren im Übrigen auch dazu verwendet werden, um zu erkennen, ob das von der Füllstation gefüllte Behältnis korrekt von der Füllstation an eine Abführvorrichtung (z. B. Abführstern) übergeben wurde. Dazu kann das vorbestimmte Behältnisübergabe-Signalfenster im Bereich der Übergabe des Behältnisses von der Füllstation zu der Abführvorrichtung vorgesehen sein.

Es ist möglich, dass ein (z. B. erstes) Behältnisübergabe-Signalfenster zur Übergabe eines Behältnisses von einer Zuführvorrichtung (z. B. Zuführstern) zu der Füllstation und/oder ein (z. B. zweites) Behältnisübergabe-Signalfenster zur Übergabe eines Behältnisses von der Füllstation zu einer Abführvorrichtung (z. B. Abführstern) für das Messsignal vorgesehen ist.

In einem Ausführungsbeispiel weist das Verfahren ein Aussetzen eines Befüllens durch die Füllstation, falls kein Vorhandensein des Behältnisses in der Füllstation erkannt wird, auf. Alternativ oder zusätzlich kann das Verfahren ein Befüllen des Behältnisses durch die Füllstation, falls ein Vorhandensein des Behältnisses in der Füllstation erkannt wird, aufweisen. Damit können Fehlfüllungen wirksam verhindert werden, da nur befüllt wird, wenn erkannt wird, dass ein Behältnis in der Füllstation vorhanden ist.

In einem weiteren Ausführungsbeispiel erfolgt das Erkennen, ob das Behältnis in der Füllstation vorhanden ist, basierend auf dem ungefilterten Messsignal und/oder verzögerungsfrei nach dem Erfassen des Messsignals. Das Verfahren kann somit auf digitale Filter o. Ä. verzichten, wodurch eine Signalauswertung zur Erkennung eines Vorhandenseins eines Behältnisses in der Füllstation verkürzt werden kann. Es kann somit früher mit einer Befüllung begonnen werden, sodass sich die Verfahren der Füllvorrichtung beschleunigen bzw. verkürzen lassen. Wie bereits erwähnt, kann die Füllvorrichtung dadurch bspw. auch kleiner konstruiert werden, z. B. durch Reduzierung der Anzahl der Füllstationen.

In einem weiteren Ausführungsbeispiel weist das vorbestimmte Behältnisübergabe-Signalfenster einen durch die Übergabe bewirkten Einschwingzeitraum des Messsignals auf oder ist im Wesentlichen durch den Einschwingzeitraum gebildet.

In einer Ausführungsform ist das vorbestimmte Behältnisübergabe-Signalfenster, vorzugsweise ein Start und/oder ein Ende des vorbestimmten Behältnisübergabe-Signalfensters, basierend auf einem oder mehreren Positionssignalen, vorzugsweise eines Drehgebers, der Füllvorrichtung vorbestimmt. Das Positionssignal des Drehgebers kann somit dazu verwendet werden, um eine Position der Füllstation zu ermitteln. Daraus kann ermittelt werden, wann die Füllstation sich in einem Übergabebereich mit der Transportvorrichtung befindet.

In einer weiteren Ausführungsform beginnt das vorbestimmte Behältnisübergabe-Signalfenster, wenn ein Positionssignal, vorzugsweise eines Drehgebers, der Füllvorrichtung angibt, dass die Übergabe des Behältnisses zwischen der Transportvorrichtung (z. B. Zuführvorrichtung oder Abführvorrichtung) und der Füllstation beginnt oder unmittelbar bevorsteht und/oder die Füllstation in einen Übergabebereich mit der Transportvorrichtung (z. B. Zuführvorrichtung oder Abführvorrichtung) einläuft.

In einer weiteren Ausführungsform endet das vorbestimmte Behältnisübergabe-Signalfenster, wenn ein Positionssignal, vorzugsweise eines Drehgebers, der Füllvorrichtung angibt, dass die Übergabe des Behältnisses zwischen der Transportvorrichtung (z. B. Zuführvorrichtung oder Abführvorrichtung) und der Füllstation endet oder gerade geendet hat und/oder die Füllstation aus einem Übergabebereich mit der Transportvorrichtung (z. B. Zuführvorrichtung oder Abführvorrichtung) ausläuft.

In einer Ausführungsvariante ist für jede der mehreren Füllstationen ein eigenes vorbestimmtes Behältnisübergabe-Signalfenster umfasst, und/oder das Verfahren wird für jede der mehreren Füllstationen der Füllvorrichtung durchgeführt. Es ist möglich, dass sich die mehreren, vorbestimmten Behältnisübergabe-Signalfenster, insbesondere von benachbarten Füllstationen, überlappen können.

In einer weiteren Ausführungsvariante wird das Erkennen, ob ein Behältnis in der Füllstation vorhanden ist, basierend auf einem Vergleich des Messsignals und/oder einem davon abgeleiteten Wert mit einem Übergabe-Referenzmesssignal und/oder einem Übergabe-Referenzwert durchgeführt.

In einer Weiterbildung weist das Verfahren ferner das Aufzeichnen und/oder Abspeichern des Übergabe-Referenzmesssignals und/oder des Übergabe-Referenzwerts in einem Anlernbetriebsmodus der Vorrichtung, bei dem in dem vorbestimmten Behältnisübergabe-Signalfenster ein Referenzbehältnis zwischen der Transportvorrichtung (z. B. Zuführvorrichtung oder Abführvorrichtung) und der Füllstation übergeben wird, auf. Somit kann das Übergabe-Referenzmesssignal und/oder der Übergabe-Referenzwert in dem Anlernbetriebsmodus anlagenspezifisch vorbestimmt werden.

Alternativ oder zusätzlich zu dem Erkennen, ob ein Behältnis in der Füllstation vorhanden ist, kann das Verfahren ein Erkennen eines Zustands der Transportvorrichtung (z. B. Zuführvorrichtung oder Abführvorrichtung), der Übergabe, der Füllstation und/oder der Füllvorrichtung basierend auf dem Messsignal aufweisen. Vorzugsweise kann hierzu das Messsignal mit einem oder mehreren Zustands-Referenzwertmesssignalen verglichen werden. Zweckmäßig können bspw. so Fehlfunktionen oder Beschädigungen an einer Halterung zum Halten des Behältnisses in der Füllstation erkannt werden. Es ist bspw. auch möglich, eine Fehlfunktion oder einen Verschleißzustand der Wiegevorrichtung zu erkennen. Der Messwert kann somit zum sogenannten "condition monitoring" eingesetzt werden. Dabei kann bspw. der Kraftfluss mit hoher Abtastrate erfasst und mit einem Soll-/Ist-Vergleich der Gesamtzustand einer Halterung (Z. B. Greifer, Klammer oder Aufnahme) der Füllstation ermittelt werden. Anschließend können bspw. in einer übergeordneten Steuereinheit entsprechende Meldungen bzw. Voralarme und/oder Alarme und Schaltvorgänge ausgelöst werden.

In einer Weiterbildung wird das Erkennen des Zustands basierend auf einem ermittelten Trendwert von mehreren, in aufeinanderfolgenden Zyklen erfassten Messsignalen der Wiegevorrichtung der Füllstation durchgeführt, wobei vorzugsweise der ermittelte Trendwert mit einem oder mehreren Referenz-Trendwerten verglichen wird.

Zweckmäßig kann jede zur Erkennung vorgesehene Fehlfunktion eine charakteristische Abweichung von dem Übergabe-Referenzmesssignal, dem Übergabe-Referenzwert und/oder dem Referenz-Trend aufweisen und derart erkennbar sein.

In einer weiteren Ausführungsform weist das Verfahren ferner ein Ausgeben einer Meldung und/oder eines Alarms basierend auf dem Erkennen, ob das Behältnis in der Füllstation vorhanden ist, auf. Alternativ oder zusätzlich kann das Verfahren ein Ausgeben einer Meldung und/oder eines Alarms basierend auf dem Erkennen des Zustands der Transportvorrichtung (z. B. Zuführvorrichtung oder Abführvorrichtung), der Übergabe, der Füllstation und/oder der Füllvorrichtung aufweisen.

Die Erfindung betrifft auch eine Vorrichtung zum Befüllen von Behältnissen. Die Vorrichtung weist eine Füllvorrichtung, vorzugsweise ein Füllerkarussell, mit mehreren Füllstationen zum Befüllen der Behältnisse auf, wobei die mehreren Füllstationen jeweils eine Wiegevorrichtung aufweisen. Die Vorrichtung weist eine Transportvorrichtung, vorzugsweise eine Zuführvorrichtung (z. B. Zuführstern), auf, die zum Übergeben der Behältnisse zwischen der Transportvorrichtung und den mehreren Füllstationen angeordnet ist. Die Vorrichtung weist eine (z. B. elektronische) Steuereinheit auf. Die mehreren Wiegevorrichtungen und die Steuereinheit können dazu ausgebildet sein, ein Verfahren wie hierin offenbart auszuführen. Zweckmäßig kann die Vorrichtung dieselben Vorteile wie das hierin offenbarte Verfahren aufweisen.

Vorzugsweise kann sich der Begriff "Steuereinheit" auf eine Elektronik beziehen, die je nach Ausbildung Steuerungsaufgaben und/oder Regelungsaufgaben übernehmen kann. Auch wenn hierin der Begriff "Steuern" verwendet wird, kann damit gleichsam zweckmäßig auch "Regeln" bzw. "Steuern mit Rückkopplung" umfasst sein.

Zweckmäßig kann die Füllervorrichtung einen Drehgeber, vorzugsweise einen Absolutwert-Drehgeber, aufweisen.

In einem Ausführungsbeispiel sind die mehreren Wiegevorrichtungen jeweils mit einer Behältnis-Abstellbodenplatte der zugeordneten Füllstation gekoppelt oder jeweils mit einer Behältnishalterung, vorzugsweise einem Behältnisgreifer oder einer Behältnisklammervorrichtung, der zugeordneten Füllstation gekoppelt.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische Abbildung einer beispielhaften Vorrichtung zum Befüllen von Behältnissen gemäß der vorliegenden Offenbarung;
- Figur 2: eine schematische Abbildung der beispielhaften Vorrichtung zu einem Behältnis-Übergabezeitpunkt;
- Figur 3: eine schematische Abbildung einer beispielhaften Füllstation der Vorrichtung zum Befüllen von Behältnissen;
- Figur 4: eine schematische Abbildung einer anderen beispielhaften Füllstation der Vorrichtung zum Befüllen von Behältnissen;
- Figur 5: eine schematische Abbildung einer beispielhaften Vorrichtung zum Betreiben einer Füllvorrichtung;
- Figur 6: ein Ablaufdiagramm eines beispielhaften Verfahrens zum Befüllen von Behältnissen gemäß der vorliegenden Offenbarung; und
- Figur 7: ein schematisches Signaldiagramm.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

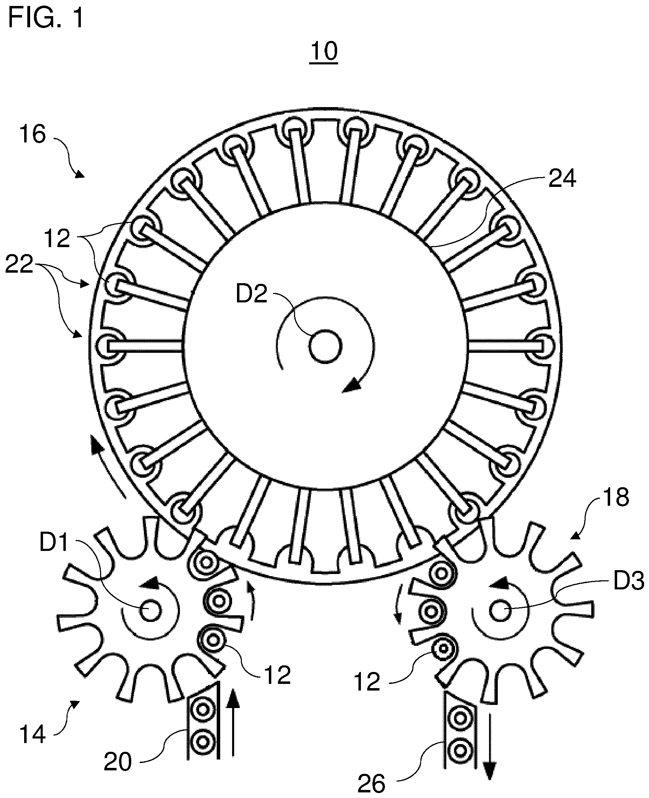

Figur 1 zeigt eine Vorrichtung 10 zum Befüllen von Behältnissen 12 in einer schematischen Draufsicht. Die Vorrichtung 10 weist eine Zuführvorrichtung (Transportvorrichtung) 14, eine als Füllvorrichtung (Füller) 16 ausgebildete Behandlungsvorrichtung und eine Abführvorrichtung (Transportvorrichtung) 18 auf.

Die Zuführvorrichtung 14 nimmt leere Behältnisse 12 bspw. von einem Förderer 20 auf. Die Zuführvorrichtung 14 transportiert die leeren Behältnisse 12 zu der Füllvorrichtung 16. Die Zuführvorrichtung 14 kann bspw. als ein Transport- oder Zuführstern ausgeführt sein. In dieser Ausführung kann die Zuführvorrichtung 14 bspw. von einem Elektromotor angetrieben sein und sich um eine Drehachse D1 drehen.

Die Füllvorrichtung 16 nimmt die leeren Behältnisse 12 von der Zuführvorrichtung 14 auf. Die Füllvorrichtung 16 weist mehrere Füllstationen 22 auf. Die Füllstationen 22 können kreisförmig angeordnet sein. Die Füllstationen 22 befüllen die leeren Behältnisse 12 mit einer vorbestimmten Füllmenge eines fließfähigen Mediums. Das fließfähige Medium kann dabei ein Getränk, eine Paste, ein chemisches, pharmazeutisches und/oder biologisches Produkt sein. Im Zentrum der Füllvorrichtung 16 kann ein Tank 24 angeordnet sein, welcher einen Vorrat des fließfähigen Mediums beinhaltet. Alternativ oder zusätzlich kann die Füllvorrichtung 16 derart ausgeführt sein, dass der Füllvorrichtung 16 das fließfähige Medium über ein Rohrsystem bspw. kontinuierlich zugeführt wird.

Die Füllvorrichtung 16 kann als ein Füllerkarussell ausgeführt sein. Die Füllvorrichtung 16 kann sich um eine Drehachse D2 drehen und bspw. von einem Elektromotor angetrieben sein. Die Füllvorrichtung 16 kann sich mit einer konstanten Winkelgeschwindigkeit um die Drehachse D2 drehen. Dabei drehen sich die Füllstationen 22 der Füllvorrichtung 16 ebenfalls um die Drehachse D2. Beim Befüllen werden die Behältnisse 12 kontinuierlich weitertransportiert, bis sie nach Beendigung der Befüllung an die Abführvorrichtung 18 übergeben werden.

Die Abführvorrichtung 18 transportiert die gefüllten Behältnisse 12 von der Füllvorrichtung 16 ab und übergibt sie bspw. an einen Förderer 26. Die Abführvorrichtung 18 kann, ähnlich wie die Zuführvorrichtung 14, als ein drehbarer Transport- oder Abführstern ausgeführt sein. In dieser Ausführung kann die Abführvorrichtung 18 bspw. von einem Elektromotor angetrieben sein und sich um eine Drehachse D3 drehen.

Die Winkelgeschwindigkeiten der Zuführvorrichtung 14, der Füllvorrichtung 16 und der Abführvorrichtung 18 können so aufeinander abgestimmt sein, dass sich die Behältnisse 12 in den Vorrichtungen 14, 16 und 18 mit einer gleichen Behältnisgeschwindigkeit bewegen.

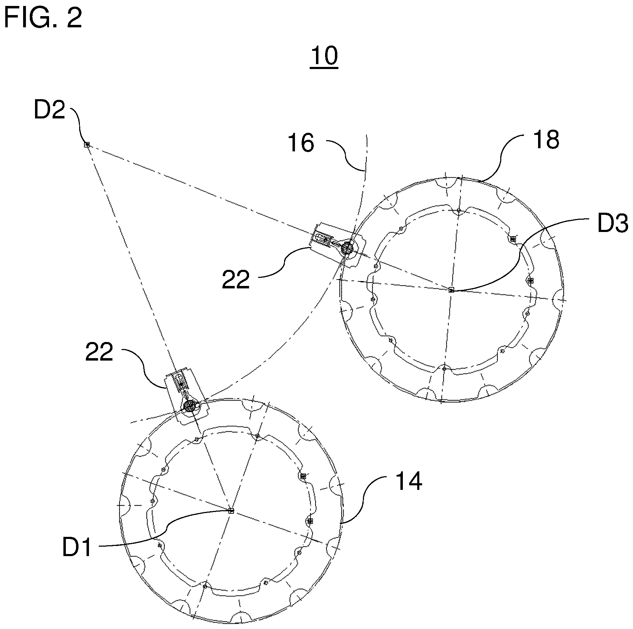

Figur 2 zeigt zur besseren Verständlichkeit schematisch eine Behältnisübergabe von der Zuführvorrichtung 14 zu der Füllvorrichtung 16. Innerhalb eines Übergabezeitraums übergibt die Zuführvorrichtung 14 ein Behältnis 12 zu einer der Füllstationen 22 der Füllvorrichtung 16. Ferner ist eine Behältnisübergabe von der Füllstation 22 der Füllvorrichtung 16 zu der Abführvorrichtung 18 dargestellt.

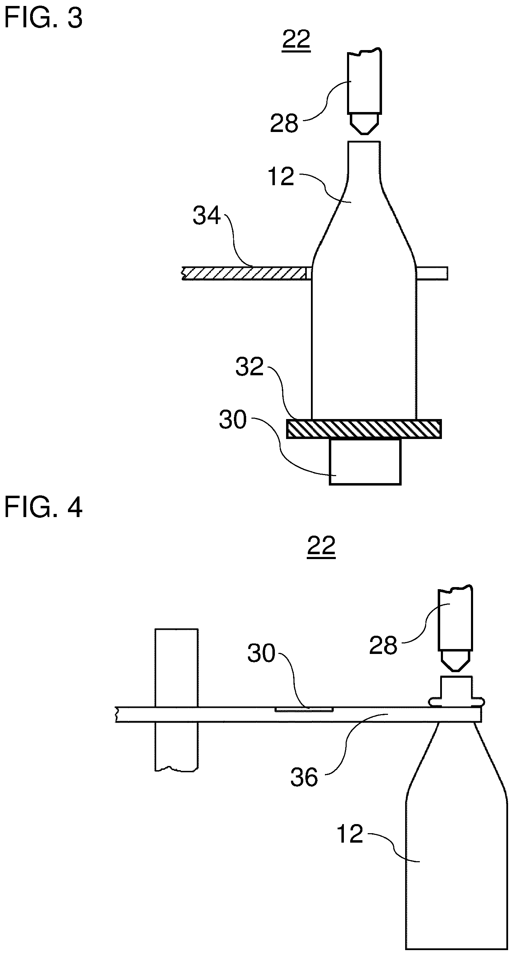

Die Figuren 3 und 4 zeigen beispielhafte Ausführungen einer der Füllstationen 22. Die Füllstationen 22 weisen jeweils eine Dosiereinrichtung 28 und eine Wiegevorrichtung 30 auf.

Mittels der Dosiereinrichtung 28 kann die vorbestimmte Füllmenge zeit- und/oder ereignisgesteuert in das Behältnis 12 eingefüllt werden. Die Dosiereinrichtung 28 kann bspw. mit dem Tank 24 (siehe Figur 1) und/oder mit dem Rohrsystem zum Zuführen des fließfähigen Mediums verbunden sein.

Die Wiegevorrichtung 30 kann eine Gewichtskraft des Behältnisses 12 erfassen. Die Wiegevorrichtung 30 kann hierzu jegliches bekanntes Messprinzip verwenden, z. B. Dehnmesstreifen oder ein Piezoelement. Die Wiegevorrichtung 30 kann bspw. als eine sogenannte Wägezelle bzw. ein Kraftaufnehmer ausgeführt sein. Die Wiegevorrichtung 30 kann ein Signal ausgeben, das eine durch die Wiegevorrichtung 30 erfasste Gewichtskraft (direkt oder indirekt) angibt.

Die Figur 3 zeigt die Füllstation 22 in einer sogenannten "Base-Handling"-Konfiguration. Hierbei wird das Behältnis 12 bodenseitig von einer Abstellbodenplatte 32 getragen und von einer (Behältnis-) Halterung 34 zusätzlich stabilisiert. Die Halterung 34 kann einen Körper des Behältnisses 12 bspw. klammer- oder greiferartig zum Halten des Behältnisses 12 umfassen. Die Wiegevorrichtung 30 ist mit der Abstellbodenplatte 32 zum Erfassen einer Gewichtskraft des Behältnisses 12 gekoppelt. Bspw. kann die Wiegevorrichtung 30 in die Abstellbodenplatte 32 integriert oder unterhalb der Abstellbodenplatte 32 angeordnet sein.

Die Figur 4 zeigt die Füllstation 22 in einer sogenannten "Neck-Handling"-Konfiguration. Hierbei wird das Behältnis 12 an dessen Hals mittels einer (Behältnis-) Halterung 36 getragen. Die Halterung 36 kann den Hals des Behältnisses 12 bspw. klammer- oder greiferartig umfassen. Die Wiegevorrichtung 30 kann mit der Halterung 36 zum Erfassen einer Gewichtskraft des Behältnisses 12 gekoppelt sein. Bspw. kann die Wiegevorrichtung 30 in die Halterung 36 integriert oder an dieser angebracht sein. Durch die in der Figur 4 nach unten wirkende Gewichtskraft des Behältnisses 12 biegt sich die hebelartige Halterung 36 nach unten. Diese Biegung kann von der Wiegevorrichtung 30 erfasst werden, sodass sich eine Gewichtskraft des Behältnisses 12 ermitteln lässt.

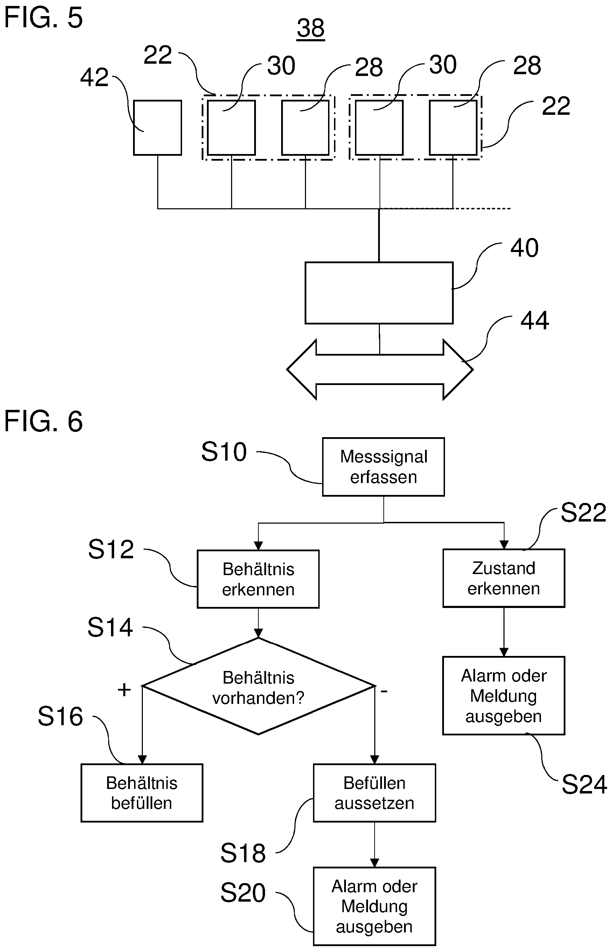

Die Figur 5 zeigt rein schematisch eine Vorrichtung 38 zum Betreiben der Füllvorrichtung 16.

Die Vorrichtung 38 weist eine Steuereinheit 40 zum Steuern und/oder Regeln des Betriebs der Füllvorrichtung 16 auf. Die Vorrichtung 38 weist ferner einen Drehgeber 42 der Füllvorrichtung 16 sowie die Wiegevorrichtungen 30 und die Dosiereinrichtungen 28 der Füllstationen 22 auf.

Die Steuereinheit 40 ist in Kommunikationsverbindung (z. B. kabellos oder kabelgebunden) mit dem Drehgeber 42, den Wiegevorrichtungen 30 und den Dosiereinrichtungen 28. Die Steuereinheit 40 kann ferner in Kommunikationsverbindung (z. B. kabellos oder kabelgebunden) mit einem Bussystem 44 sein, um Daten und/oder Signale mit anderen an dem Bussystem 44 angeschlossenen Anlagen, z. B. umfassend ein Zentralsteuerung, auszutauschen.

Der Drehgeber 42 ist dazu ausgebildet, eine (Dreh-) Position der Füllvorrichtung 16 zu erfassen. Der Drehgeber 42 kann ein Signal an die Steuereinheit 40 ausgeben, das die Position der Füllvorrichtung 16 angibt. Der Drehgeber 42 kann bspw. ein Absolutwert-Drehgeber sein. Basierend auf dem Signal kann die Steuereinheit 40 die Winkel- bzw. Drehpositionen jeder Füllstation 22 ermitteln, z. B. berechnen.

Die Steuereinheit 40 kann ferner Signale von den Wiegevorrichtungen 30 empfangen, die sich auf eine durch die jeweilige Wiegevorrichtung 30 erfasste Gewichtskraft beziehen.

Die Steuereinheit 40 kann ferner Signale zu den Dosiereinrichtungen 28 ausgeben, um selektiv eines oder mehrere Ventile der Dosiereinrichtungen 28 zu öffnen oder zu schließen. Damit kann ein Befüllen durch die jeweilige Dosiereinrichtung 28 aktiviert und deaktiviert werden.

Um sogenannte Fehlfüllungen, bei denen ohne Vorhandensein eines Behältnisses 12 in der Füllstation 22 das fließfähige Medium zugeführt wird, möglichst sicher auszuschließen, werden die Dosiereinrichtungen 28 durch die Steuereinheit 40 nur dann aktiviert, wenn erkannt wird, dass sich ein Behältnis 12 in der Füllstation 22 befindet.

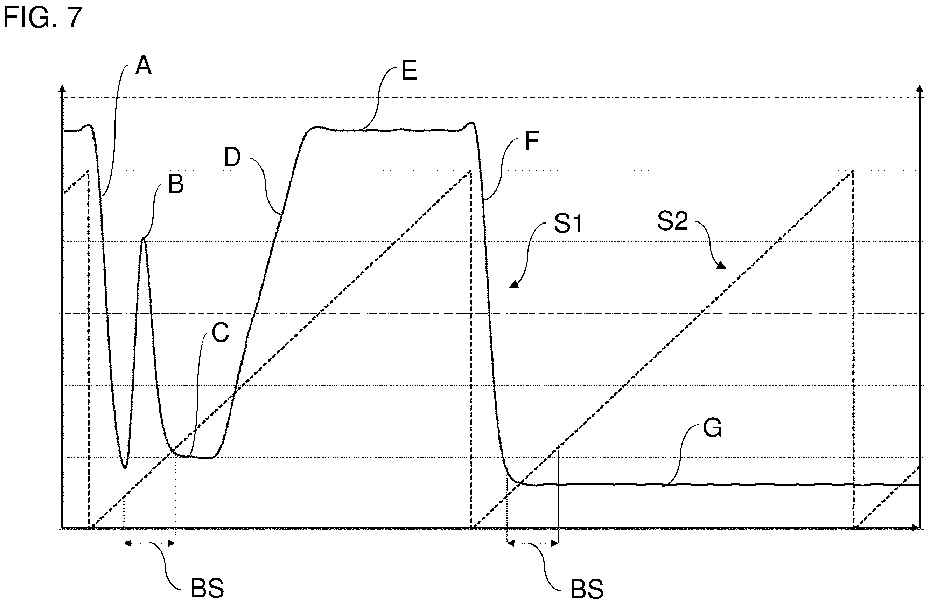

Nachfolgend ist insbesondere unter Bezugnahme auf Figuren 6 und 7 ein beispielhaftes Verfahren beschrieben, mit dem sich Fehlfüllungen verhindern lassen. Das Verfahren kann bspw. von der Vorrichtung 38 ausgeführt werden.

In einem Schritt S10 wird von der Wiegevorrichtung 30 ein Messsignal erfasst. Eine Besonderheit der Erfassung liegt darin, dass das Messsignal in einem vorbestimmten Behältnisübergabe-Signalfenster BS erfasst wird. Innerhalb des Behältnisübergabe-Signalfensters BS wird im Normalbetrieb das Behältnis 12 von der Zuführvorrichtung 14 an die Füllvorrichtung 16 übergeben (siehe Figuren 1 und 2).

Unter Bezug auf Figur 7 ist das Behältnisübergabe-Signalfenster BS dargestellt. Die Figur 7 zeigt einen Signalverlauf S1 einer der Wiegevorrichtungen 30 (durchgezogene Linie), der die gemessene Gewichtskraft (y-Achse) in Abhängigkeit von Steuerzyklen der Steuereinheit 40 oder der Zeit (x-Achse) angibt. Die Figur 7 zeigt ferner einen Signalverlauf S2 des Drehgebers 42 (gestrichelte Linie), der eine Absolutdrehwinkelposition der Füllvorrichtung 16 bzw. der Füllstation 22 (y-Achse) in Abhängigkeit von Steuerzyklen der Steuereinheit 40 oder der Zeit (x-Achse) angibt.

Der Signalverlauf S1 kann wie folgt interpretiert werden: Zunächst wird ein in der Füllstation 22 vorhandenes und gefülltes Behältnis 12 von der Füllvorrichtung 16 an die Abführvorrichtung 18 übergeben (Abschnitt A). Der Signalverlauf S1 fällt dabei steil ab. Danach wird ein neues und ungefülltes Behältnis 12 von der Zuführvorrichtung 14 an die Füllvorrichtung 16 übergeben (Abschnitt B). Dadurch kommt es zu einem Ausschlag im Signalverlauf S1. Nach einem kurzen Einschwingzeitraum (Abschnitt B) ist der Betrag des Signals etwas höher als vor der Behältnisübergabe, nämlich erhöht um die Gewichtskraft des Behältnisses 12 (Abschnitt C). Der Ausschlag im Abschnitt B kann daher kommen, dass das Behältnis 12 in die z. B. als Klammer ausgeführte Halterung 34, 36 gedrückt wird. Die Halterung 34, 36 kann eine Vorspannung in Richtung zu einer geschlossenen Position aufweisen und bei der Behältnisübergabe vom Behältnis 12 aufgedrückt werden. Wenn das Behältnis 12 also in die Halterung 34, 36 eingedrückt wird, ergibt das einen kleinen "Schlag", der zu dem Ausschlag im Abschnitt B führt. Danach wird das Behältnis 12 befüllt, und der Signalverlauf steigt entsprechend bis zu einem Wert an, an dem die gewünschte Füllmenge in das Behältnis 12 gefüllt wurde (Abschnitt D). Der Signalverlauf bleibt dann während des restlichen Transports durch die Füllvorrichtung 16 im Wesentlichen konstant (Abschnitt E). Im Abschnitt E läuft eine Beruhigungs- und/oder Abtropfphase ab. In diesem Abschnitt E bleiben Gewicht und Behältnisinhalt im entsprechenden Behältnis 12 gleich. Das eingefüllte fließfähige Medium legt sich im Behältnis 12. Schließlich fällt der Signalverlauf bei der Übergabe des Behältnisses 12 von der Füllvorrichtung 16 an die Abführvorrichtung 18 wieder steil ab, bis er einen Wert erreicht, der ungefähr einem Wert vor der Behältnisübergabe von der Zuführvorrichtung 14 an die Füllvorrichtung 16 entspricht (Abschnitt F). Der nachfolgende Signalverlauf S1 zeigt, dass kein weiteres Behältnis 12 von der Zuführvorrichtung 14 an die Füllvorrichtung 16 übergeben und von der Füllvorrichtung 16 gefüllt wurde (Abschnitt G).

Der Signalverlauf S2 zeigt, dass ein Takt der Füllvorrichtung 16 bspw. jeweils bei oder nach Übergabe eines Behältnisses 12 von der Füllvorrichtung 16 zu der Abführvorrichtung 18 beginnen kann.

Das Behältnisübergabe-Signalfenster BS ist durch den Signalverlauf S2 vorgegeben und liegt in einem Drehwinkelbereich, in dem die Behältnisübergabe zu erwarten wäre. Das Behältnisübergabe-Signalfenster BS kann bspw. beginnen, wenn ein durch den Drehgeber 42 ausgegebenes Positionssignal angibt, dass eine Übergabe eines Behältnisses 12 von der Zuführvorrichtung 14 zu der Füllstation 22 beginnt oder unmittelbar bevorsteht bzw. wenn die jeweilige Füllstation 22 in einen Übergabebereich mit der Zuführvorrichtung 14 einläuft. Das Behältnisübergabe-Signalfenster BS kann bspw. enden, wenn ein durch den Drehgeber 42 ausgegebenes Positionssignal angibt, dass die Übergabe endet oder gerade geendet hat bzw. die Füllstation 22 aus dem Übergabebereich mit der Zuführvorrichtung 14 ausläuft. D. h., gemäß dem hierin offenbarten Verfahren wird insbesondere kein Einschwingzeitraum der Wiegevorrichtung 30 abgewartet, sondern stattdessen das Einschwingsignal der Wiegevorrichtung 30 selbst (teilweise oder vollständig) als das Messsignal verwendet.

Es versteht sich, dass für jede der Füllstationen 22 ein eigenes Behältnisübergabe-Signalfenster BS vorgesehen sein kann. Es ist möglich, dass sich die Behältnisübergabe-Signalfenster BS von nebeneinander angeordneten Füllstationen 22 teilweise überlappen.

Unter erneuter Bezugnahme auf Figur 6 wird in einem Schritt S12 basierend auf dem im Verfahrensschritt S10 erfassten Messwert eine Behältniserkennung in der Füllstation 22 durchgeführt. Dazu kann das im Behältnisübergabe-Signalfenster BS erfasste Messsignal entsprechend ausgewertet werden. Eine weitere Besonderheit des Verfahrens kann darin bestehen, dass das Messsignal ungefiltert und verzögerungsfrei ausgewertet wird. Es wurde erkannt, dass das Messsignal selbst genügend charakteristisch ist, um eine unmittelbare Auswertung im Hinblick auf die Prüfung, ob ein Behältnis in der Füllstation 22 vorhanden ist oder nicht, zu ermöglichen.

Es ist bspw. möglich, dass das Messsignal mit einem Übergabe-Referenzmesssignal verglichen wird. Das Übergabe-Referenzmesssignal kann bspw. anlagenspezifisch in einem Anlernbetriebsmodus, bei dem in dem vorbestimmten Behältnisübergabe-Signalfenster BS ein Referenzbehältnis von der Zuführvorrichtung 14 zu der Füllstation 22 übergeben wird, aufgezeichnet werden. Zusätzlich oder alternativ kann von dem Messsignal auch ein Wert abgeleitet werden, z. B. durch Differentiation, der mit einem Übergabe-Referenzwert verglichen wird. Der Übergabe-Referenzwert kann bspw. von dem Übergabe-Referenzmesssignal abgeleitet sein, z. B. durch Differentiation. Das Übergabe-Referenzmesssignal und/oder der Übergabe-Referenzwert kann bspw. in der Steuereinheit 40 abgespeichert sein.

Basierend auf dem Schritt S12 wird im Schritt S14 entschieden, ob ein Behältnis 12 in der Füllstation 22 vorhanden ist (+) oder nicht (-). Wird entschieden, dass ein Behältnis 12 in der Füllstation 22 vorhanden ist (+), fährt das Verfahren mit einem Schritt S16 fort. Wird hingegen entschieden, dass kein Behältnis 12 in der Füllstation 22 vorhanden ist (-), fährt das Verfahren mit einem Schritt S18 fort.

Im Schritt S16 wird das vorhandene Behältnis 12 durch die Füllstation 22 mit einer vorbestimmten Füllmenge, bspw. basierend auf Messsignalen der Wiegevorrichtung 30 zum Einhalten der vorbestimmten Füllmenge, befüllt. Anschließend kann das Behältnis 12 von der Füllstation 22 an die Abführvorrichtung 18 übergeben werden und später bspw. noch etikettiert und/oder verschlossen werden. Der Ablauf der Schritte S10→S12→S14→S16 kann beispielhaft entsprechend dem Ablauf der Abschnitte B→C→D (→E→F) im Diagramm von Figur 7 im Hinblick auf die Signalausgabe der Wiegevorrichtung 30 (Signalverlauf S1) nachvollzogen werden.

Im Schritt S18 wird ein Befüllen durch die Füllstation 22 ausgesetzt, um eine Fehlfüllung zu verhindern, da kein Behältnis 12 in der Füllstation 22 vorhanden ist. Der Ablauf der Schritte S10→S12→S14→S18 kann beispielhaft in dem Abschnitt G im Diagramm von Figur 7 im Hinblick auf die Signalausgabe der Wiegevorrichtung 30 (Signalverlauf S1) nachvollzogen werden.

Das Verfahren kann mit einem Schritt S20 fortfahren, in dem ein Alarm und/oder eine Meldung an eine Benutzerschnittstelle oder eine Steuereinheit der Vorrichtung 10 ausgegeben werden kann. Der Alarm und/oder die Meldung kann bspw. Informationen hinsichtlich der betroffenen Füllstation 22 aufweisen.

Es versteht sich, dass das Verfahren auch dazu verwendet werden kann, um zu prüfen, ob ein von der Füllstation 22 befülltes Behältnis 12 korrekt von der Füllstation 22 an die Abführvorrichtung 18 übergeben wurde.

Alternativ oder zusätzlich zu der Möglichkeit der Prüfung auf ein Vorhandensein eines Behältnisses 12 in der Füllstation 22 usw. kann das im Schritt S10 erfasste Messsignal auch dazu verwendet werden, einen Zustand der Zuführvorrichtung 14, der Übergabe, der Füllstation 22 und/oder der Füllvorrichtung 16 in einem Schritt S22 zu ermitteln ("condition monitoring").

Im Rahmen der Zustandsermittlung im Schritt S22 kann bspw. der Ausschlag bzw. die Amplitude im Abschnitt B (siehe Figur 7) bzw. im Behältnisübergabe-Signalfenster BS überwacht werden. Wenn der Ausschlag im Abschnitt B bzw. im Behältnisübergabe-Signalfenster BS im Laufe der Arbeitszyklen kleiner wird, kann darauf geschlossen werden, dass die bspw. als Klammer ausgeführte Halterung 34, 36 verschleißt und ausleiert. Bspw. kann ein vorbestimmter Grenzwert für den Ausschlag im Abschnitt B vorgesehen und in der Steuereinheit 40 gespeichert sein. Bei Unterschreiten des vorbestimmten Grenzwerts durch einen aktuellen Ausschlag im Abschnitt B bzw. im Behältnisübergabe-Signalfenster BS kann bspw. eine Meldung ausgegeben werden, die den Maschinenbetreiber auf eine erforderliche Wartung und/oder einen Tausch hinweist.

Allgemein kann das Messsignal bspw. mit einem Zustands-Referenzmesswert oder einem davon abgeleiteten Wert, der oder die bspw. in der Steuereinheit 40 abgespeichert ist, verglichen werden. Es ist auch möglich, dass ein Trend mehrerer Messsignale derselben Wiegevorrichtung 30 aus aufeinanderfolgenden Füllzyklen mit einem Referenz-Trendwert, der bspw. in der Steuereinheit 40 abgespeichert ist, verglichen wird. Es können bspw. empirisch und/oder mittels Simulation ermittelte Zustands-Referenzmesswerte, davon abgeleitete Werte und/oder Referenz-Trendwerte in der Steuereinheit 40 abgespeichert sein, die eine Fehlfunktion der Halterung 34 oder 36 der Füllstation 22 oder eine Fehlfunktion oder einen Verschleißzustand der Wiegevorrichtung 30 usw. angeben.

In einem Schritt S24 kann in Abhängigkeit von der Zustandserkennung aus Schritt S22 bspw. ein Alarm oder eine Meldung an eine Benutzerschnittstelle oder einer Steuereinheit der Vorrichtung 10 ausgegeben werden. Der Alarm und/oder die Meldung kann bspw. Informationen zu dem erkannten Zustand enthalten und ggf. Schaltvorgänge in der Vorrichtung 10 auslösen. Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen, wie in den Ansprüchen definiert.

### Bezugszeichenliste

- 10: Vorrichtung zum Befüllen von Behältnissen
- 12: Behältnis
- 14: Zuführvorrichtung
- 16: Füllvorrichtung
- 18: Abführvorrichtung
- 20: Förderer
- 22: Füllstation
- 24: Tank
- 26: Förderer
- 28: Dosiereinrichtung
- 30: Wiegevorrichtung
- 32: Abstellbodenplatte
- 34: Halterung
- 36: Halterung
- 38: Vorrichtung zum Betreiben der Füllvorrichtung
- 40: Steuereinheit
- 42: Drehgeber
- 44: Bussystem

- D1-D3: Drehachse
- S10-S24: Verfahrensschritte
- S1: Signalverlauf der Wiegevorrichtung
- S2: Signalverlauf des Drehgebers
- A-G: Abschnitte
- BS: Behältnisübergabe-Signalfenster

## Patentansprüche

1. Verfahren zum Betreiben einer Vorrichtung (10) zum Befüllen von Behältnissen (12), aufweisend:
Erfassen eines Messsignals einer Wiegevorrichtung (30) einer Füllstation (22) von mehreren Füllstationen (22) einer Füllvorrichtung (16), vorzugsweise eines Füllerkarussells, in einem vorbestimmten Behältnisübergabe-Signalfenster (BS) zur Übergabe eines Behältnisses (12) zwischen einer Transportvorrichtung (14, 18), vorzugsweise einer Zuführvorrichtung (14), und der Füllstation (22); und
Erkennen, ob ein Behältnis (12) in der Füllstation (22) vorhanden ist, basierend auf dem Messsignal.

2. Verfahren nach Anspruch 1, ferner aufweisend:
Aussetzen eines Befüllens durch die Füllstation (22), falls kein Vorhandensein des Behältnisses (12) in der Füllstation (22) erkannt wird; und/oder
Befüllen des Behältnisses (12) durch die Füllstation (22), falls ein Vorhandensein des Behältnisses (12) in der Füllstation (22) erkannt wird.

3. Verfahren nach Anspruch 1 oder Anspruch 2, wobei:
das Erkennen, ob das Behältnis (12) in der Füllstation (22) vorhanden ist, basierend auf dem ungefilterten Messsignal und/oder verzögerungsfrei nach dem Erfassen des Messsignals erfolgt.

4. Verfahren nach einem der vorherigen Ansprüche, wobei:
das vorbestimmte Behältnisübergabe-Signalfenster (BS) einen durch die Übergabe bewirkten Einschwingzeitraum des Messsignals aufweist oder im Wesentlichen durch den Einschwingzeitraum gebildet ist.

5. Verfahren nach einem der vorherigen Ansprüche, wobei:
das vorbestimmte Behältnisübergabe-Signalfenster (BS), vorzugsweise ein Start und/oder ein Ende des vorbestimmten Behältnisübergabe-Signalfensters (BS), basierend auf einem oder mehreren Positionssignalen, vorzugsweise eines Drehgebers (40), der Füllvorrichtung (16) vorbestimmt ist.

6. Verfahren nach einem der vorherigen Ansprüche, wobei das vorbestimmte Behältnisübergabe-Signalfenster (BS) beginnt, wenn ein Positionssignal, vorzugsweise eines Drehgebers (40), der Füllvorrichtung (16) angibt, dass:
die Übergabe des Behältnisses (12) zwischen der Transportvorrichtung (14, 18) und der Füllstation (22) beginnt oder unmittelbar bevorsteht; oder
die Füllstation (22) in einen Übergabebereich mit der Transportvorrichtung (14, 18) einläuft.

7. Verfahren nach einem der vorherigen Ansprüche, wobei das vorbestimmte Behältnisübergabe-Signalfenster (BS) endet, wenn ein Positionssignal, vorzugsweise eines Drehgebers (40), der Füllvorrichtung (16) angibt, dass:
die Übergabe des Behältnisses (12) zwischen der Transportvorrichtung (14, 18) und der Füllstation (22) endet oder gerade geendet hat; und/oder
die Füllstation (22) aus einem Übergabebereich mit der Transportvorrichtung (14, 18) ausläuft.

8. Verfahren nach einem der vorherigen Ansprüche, wobei:
für jede der mehreren Füllstationen (22) ein eigenes vorbestimmtes Behältnisübergabe-Signalfenster (BS) umfasst ist; und/oder
das Verfahren für jede der mehreren Füllstationen (22) der Füllvorrichtung (16) durchgeführt wird.

9. Verfahren nach einem der vorherigen Ansprüche, wobei:
das Erkennen, ob ein Behältnis (12) in der Füllstation (22) vorhanden ist, basierend auf einem Vergleich des Messsignals und/oder einem davon abgeleiteten Wert mit einem Übergabe-Referenzmesssignal und/oder einem Übergabe-Referenzwert durchgeführt wird.

10. Verfahren nach Anspruch 9, ferner aufweisend:
Aufzeichnen und/oder Abspeichern des Übergabe-Referenzmesssignals und/oder des Übergabe-Referenzwerts in einem Anlernbetriebsmodus der Vorrichtung (10), bei dem in dem vorbestimmten Behältnisübergabe-Signalfenster (BS) ein Referenzbehältnis zwischen der Transportvorrichtung (14, 18) und der Füllstation (22) übergeben wird.

11. Verfahren nach einem der vorherigen Ansprüche, ferner aufweisend:
Erkennen eines Zustands der Transportvorrichtung (14, 18), der Übergabe, der Füllstation (22) und/oder der Füllvorrichtung (16) basierend auf dem Messsignal, wobei vorzugsweise:
das Messsignal mit einem oder mehreren Zustands-Referenzwertmesssignalen verglichen wird.

12. Verfahren nach Anspruch 11, wobei:
das Erkennen des Zustands basierend auf einem ermittelten Trendwert von mehreren, in aufeinanderfolgenden Zyklen erfassten Messsignalen der Wiegevorrichtung (30) der Füllstation (22) durchgeführt wird, wobei vorzugsweise:
der ermittelte Trendwert mit einem oder mehreren Referenz-Trendwerten verglichen wird.

13. Verfahren nach einem der vorherigen Ansprüche, ferner aufweisend:
Ausgeben einer Meldung und/oder eines Alarms basierend auf dem Erkennen, ob das Behältnis (12) in der Füllstation (22) vorhanden ist, und/oder
Ausgeben einer Meldung und/oder eines Alarms basierend auf dem Erkennen des Zustands der Transportvorrichtung (14, 18), der Übergabe, der Füllstation (22) und/oder der Füllvorrichtung (16).

14. Vorrichtung (10) zum Befüllen von Behältnissen (12), aufweisend:
eine Füllvorrichtung (16), vorzugsweise ein Füllerkarussell, mit mehreren Füllstationen (22) zum Befüllen der Behältnisse (12), wobei die mehreren Füllstationen (22) jeweils eine Wiegevorrichtung (30) aufweisen;
eine Transportvorrichtung (14, 18), vorzugsweise eine Zuführvorrichtung (14), die zum Übergeben der Behältnisse (12) zwischen der Transportvorrichtung (14, 18) und den mehreren Füllstationen (22) angeordnet ist, und
eine Steuereinheit (40),
wobei die mehreren Wiegevorrichtungen (30) und die Steuereinheit (40) dazu ausgebildet sind, ein Verfahren nach einem der vorherigen Ansprüche auszuführen.

15. Vorrichtung (10) nach Anspruch 14, wobei:
die mehreren Wiegevorrichtungen (30) jeweils mit einer Behältnis-Abstellbodenplatte (32) der zugeordneten Füllstation (22) gekoppelt ist; oder
die mehreren Wiegevorrichtungen (30) jeweils mit einer Behältnishalterung (34, 36), vorzugsweise einem Behältnisgreifer oder einer Behältnisklammervorrichtung, der zugeordneten Füllstation (22) gekoppelt ist.

## Claims

1. A method for operating an apparatus (10) for filling containers (12), comprising:
acquiring a measurement signal from a weighing apparatus (30) of a filling station (22) from multiple filling stations (22) of a filling apparatus (16), preferably a filler carousel, in a predetermined container transfer signal window (BS) for transferring a container (12) between a transport apparatus (14, 18), preferably a supply apparatus (14), and the filling station (22); and
detecting whether a container (12) is present in the filling station (22) on the basis of the measurement signal.

2. The method according to Claim 1, further comprising:
stopping filling by way of the filling station (22) if the presence of the container (12) in the filling station (22) is not detected; and/or
filling the container (12) by way of the filling station (22) if the presence of the container (12) in the filling station (20) is detected.

3. The method according to Claim 1 or Claim 2, wherein:
the detection of whether the container (12) is present in the filling station (22) takes place on the basis of the unfiltered measurement signal and/or without delay after the measurement signal is acquired.

4. The method according to one of the preceding claims, wherein:
the predetermined container transfer signal window (BS) comprises a transient period of the measurement signal, brought about by the transfer, or is substantially formed by the transient period.

5. The method according to one of the preceding claims, wherein:
the predetermined container transfer signal window (BS), preferably a start and/or an end of the predetermined container transfer signal window (BS), is predetermined on the basis of one or more position signals, preferably from a rotary encoder (40), from the filling apparatus (16).

6. The method according to one of the preceding claims, wherein the predetermined container transfer signal window (BS) begins when a position signal, preferably from a rotary encoder (40), from the filling apparatus (16) indicates that:
transfer of the container (12) between the transport apparatus (14, 18) and the filling station (22) is beginning or is immediately imminent; or
the filling station (22) is entering a transfer region with the transport apparatus (14, 18).

7. The method according to one of the preceding claims, wherein the predetermined container transfer signal window (BS) ends when a position signal, preferably from a rotary encoder (40), from the filling apparatus (16) indicates that:
transfer of the container (12) between the transport apparatus (14, 18) and the filling station (22) is ending or has just ended; and/or
the filling station (22) is leaving a transfer region with the transport apparatus (14, 18).

8. The method according to one of the preceding claims, wherein:
a dedicated predetermined container transfer signal window (BS) is included for each of the multiple filling stations (22); and/or
the method is performed for each of the multiple filling stations (22) of the filling apparatus (16).

9. The method according to one of the preceding claims, wherein:
the detection of whether a container (12) is present in the filling station (22) is performed on the basis of a comparison of the measurement signal and/or a value derived therefrom with a transfer reference measurement signal and/or a transfer reference value.

10. The method according to Claim 9, further comprising:
recording and/or storing the transfer reference measurement signal and/or the transfer reference value in a training operating mode of the apparatus (10), in which a reference container is transferred between the transport apparatus (14, 18) and the filling station (22) in the predetermined container transfer signal window (BS).

11. The method according to one of the preceding claims, further comprising:
detecting a state of the transport apparatus (14, 18), of the transfer, of the filling station (22) and/or of the filling apparatus (16) on the basis of the measurement signal, wherein preferably:
the measurement signal is compared with one or more state reference value measurement signals.

12. The method according to Claim 11, wherein:
the detection of the state is performed on the basis of an ascertained trend value of multiple measurement signals, detected in successive cycles, from the weighing apparatus (30) of the filling station (22), wherein preferably:
the ascertained trend value is compared with one or more reference trend values.

13. The method according to one of the preceding claims, further comprising:
outputting a report and/or an alarm on the basis of the detection of whether the container (12) is present in the filling station (22), and/or
outputting a report and/or an alarm on the basis of the detection of the state of the transport apparatus (14, 18), the transfer, the filling station (22) and/or the filling apparatus (16).

14. An apparatus (10) for filling containers (12), comprising:
a filling apparatus (16), preferably a filler carousel, having multiple filling stations (22) for filling the containers (12), the multiple filling stations (22) each having a weighing apparatus (30);
a transport apparatus (14, 18), preferably a supply apparatus (14), that is arranged for the purpose of transferring the containers (12) between the transport apparatus (14, 18) and the multiple filling stations (22), and
a control unit (40),
wherein the multiple weighing apparatuses (30) and the control unit (40) are designed to carry out a method according to one of the preceding claims.

15. The apparatus (10) according to Claim 14, wherein:
the multiple weighing apparatuses (30) are each coupled to a container drop baseplate (32) of the associated filling station (22); or
the multiple weighing apparatuses (30) are each coupled to a container holder (34, 36), preferably a container gripper or a container clamp apparatus, of the associated filling station (22).

## Revendications

1. Procédé d'exploitation d'un dispositif (10) permettant de remplir des récipients (12), présentant les étapes consistant à :
détecter un signal de mesure d'un dispositif de pesage (30) d'une station de remplissage (22) parmi plusieurs stations de remplissage (22) d'un dispositif de remplissage (16), de préférence d'un carrousel de remplissage, dans une fenêtre de signal de transfert de récipient prédéterminée (BS) pour le transfert d'un récipient (12) entre un dispositif de transport (14, 18), de préférence un dispositif d'alimentation (14), et la station de remplissage (22) ; et
identifier si un récipient (12) est présent dans la station de remplissage (22), sur la base du signal de mesure.

2. Procédé selon la revendication 1, présentant en outre les étapes consistant à :
suspendre un remplissage par la station de remplissage (22) si aucune présence du récipient (12) dans la station de remplissage (22) n'est identifiée ; et/ou
remplir le récipient (12) par la station de remplissage (22) si une présence du récipient (12) est identifiée dans la station de remplissage (22).

3. Procédé selon la revendication 1 ou la revendication 2, dans lequel :
l'identification si le récipient (12) est présent dans la station de remplissage (22) est effectuée sur la base du signal de mesure non filtré et/ou sans délai après la détection du signal de mesure.

4. Procédé selon l'une quelconque des revendications précédentes, dans lequel :
la fenêtre de signal de transfert de récipient prédéterminée (BS) présente une période transitoire du signal de mesure, provoquée par le transfert, ou est formée substantiellement par la période transitoire.

5. Procédé selon l'une quelconque des revendications précédentes, dans lequel :
la fenêtre de signal de transfert de récipient prédéterminée (BS), de préférence un début et/ou une fin de la fenêtre de signal de transfert de récipient prédéterminée (BS), est prédéterminée sur la base d'un ou de plusieurs signaux de position, de préférence d'un capteur rotatif (40), du dispositif de remplissage (16) .

6. Procédé selon l'une quelconque des revendications précédentes, dans lequel la fenêtre de signal de transfert de récipient prédéterminée (BS) commence quand un signal de position, de préférence d'un capteur rotatif (40), du dispositif de remplissage (16) indique que :
le transfert du récipient (12) entre le dispositif de transport (14, 18) et la station de remplissage (22) commence ou est imminent ; ou
la station de remplissage (22) entre dans une zone de transfert avec le dispositif de transport (14, 18).

7. Procédé selon l'une quelconque des revendications précédentes, dans lequel la fenêtre de signal de transfert de récipient prédéterminée (BS) se termine quand un signal de position, de préférence d'un capteur rotatif (40), du dispositif de remplissage (16) indique que :
le transfert du récipient (12) entre le dispositif de transport (14, 18) et la station de remplissage (22) se termine ou vient de se terminer ; et/ou
la station de remplissage (22) sort d'une zone de transfert avec le dispositif de transport (14, 18).

8. Procédé selon l'une quelconque des revendications précédentes, dans lequel :
une fenêtre de signal de transfert de récipient prédéterminée (BS) propre est contenue pour chacune des plusieurs stations de remplissage (22) ; et/ou
le procédé est effectué pour chacune des plusieurs stations de remplissage (22) du dispositif de remplissage (16).

9. Procédé selon l'une quelconque des revendications précédentes, dans lequel :
l'identification si un récipient (12) est présent dans la station de remplissage (22) est effectuée sur la base d'une comparaison du signal de mesure et/ou d'une valeur déduite de celui-ci avec un signal de mesure de référence de transfert et/ou une valeur de référence de transfert.

10. Procédé selon la revendication 9, présentant en outre les étapes consistant à :
enregistrer et/ou stocker le signal de mesure de référence de transfert et/ou la valeur de référence de transfert dans un mode de fonctionnement d'apprentissage du dispositif (10) dans lequel un récipient de référence est transféré entre le dispositif de transport (14, 18) et la station de remplissage (22) dans la fenêtre de signal de transfert de récipient prédéterminée (BS).

11. Procédé selon l'une quelconque des revendications précédentes, présentant en outre les étapes consistant à :
identifier un état du dispositif de transport (14, 18), du transfert, de la station de remplissage (22) et/ou du dispositif de remplissage (16) sur la base du signal de mesure, dans lequel de préférence :
le signal de mesure est comparé avec un ou plusieurs signaux de mesure de valeur de référence d'état.

12. Procédé selon la revendication 11, dans lequel :
l'identification de l'état est effectuée sur la base d'une valeur de tendance établie de plusieurs signaux de mesure, détectés dans des cycles consécutifs, du dispositif de pesage (30) de la station de remplissage (22), dans lequel de préférence :
la valeur de tendance établie est comparée avec une ou plusieurs valeurs de tendance de référence.

13. Procédé selon l'une quelconque des revendications précédentes, présentant en outre les étapes consistant à :
émettre un message et/ou une alarme sur la base de l'identification si le récipient (12) est présent dans la station de remplissage (22), et/ou
émettre un message et/ou une alarme sur la base de l'identification de l'état du dispositif de transport (14, 18), du transfert, de la station de remplissage (22) et/ou du dispositif de remplissage (16).

14. Dispositif (10) permettant de remplir des récipients (12), présentant :
un dispositif de remplissage (16), de préférence un carrousel de remplissage, comprenant plusieurs stations de remplissage (22) pour remplir les récipients (12), dans lequel les plusieurs stations de remplissage (22) présentent respectivement un dispositif de pesage (30) ;
un dispositif de transport (14, 18), de préférence un dispositif d'alimentation (14), qui est disposé pour transférer les récipients (12) entre le dispositif de transport (14, 18) et les plusieurs stations de remplissage (22), et
une unité de commande (40),
dans lequel les plusieurs dispositifs de pesage (30) et l'unité de commande (40) sont réalisés pour exécuter un procédé selon l'une quelconque des revendications précédentes.

15. Dispositif (10) selon la revendication 14, dans lequel :
les plusieurs dispositifs de pesage (30) sont couplés respectivement avec une plaque de base de stockage de récipient (32) de la station de remplissage (22) associée ; ou
les plusieurs dispositifs de pesage (30) sont respectivement couplés avec un support de récipient (34, 36), de préférence un préhenseur de récipient ou un dispositif de saisie de récipient, de la station de remplissage (22) associée.
